# EUROPEAN PATENT APPLICATION

(11) **EP 2 860 160 A1**
(43) Date of publication of application: **15.04.2015**
(21) Application number: 13797158.6
(22) Date of filing: 30.05.2013
(51) Int. Cl.: C03C 3/091, C03C 3/087, C03C 3/093, C03C 15/00

(54) **ALKALI-FREE GLASS SUBSTRATE AND METHOD FOR REDUCING THICKNESS OF ALKALI-FREE GLASS SUBSTRATE**

(30) Priority: 31.05.2012 JP 2012124760
(71) Applicant: Asahi Glass Company, Limited, Tokyo 100-8405 (JP)
(72) Inventor: TOKUNAGA Hirofumi, Tokyo 100-8405 (JP); TSUJIMURA Tomoyuki, Tokyo 100-8405 (JP); NISHIZAWA Manabu, Tokyo 100-8405 (JP); KOIKE Akio, Tokyo 100-8405 (JP)
(74) Representative: Müller-Boré & Partner Patentanwälte PartG mbB
(86) International application number: PCT/JP2013/065049
(87) International publication number: WO 2013/180220

(57) **Abstract**

The present invention relates to an alkali-free glass substrate with a thickness of 0.4 mm or less, which has been reduced in thickness by 5 µm or more by a hydrofluoric acid (HF) etching treatment, in which the alkali-free glass substrate contains an alkali-free glass described below, and the alkali-free glass substrate after reduced in thickness has a specific modulus of 32 MNm/kg or more and a photoelastic constant of 31 nm/MPa/cm or less, the alkali-free glass having a strain point of 710°C or higher, an average thermal expansion coefficient at 50 to 350°C of from 30×10⁻⁷ to 43×10⁻⁷/°C, a temperature T₂ at which a glass viscosity reaches 10² dPa·s of 1710°C or lower, a temperature T₄ at which the glass viscosity reaches 10⁴ dPa·s of 1320°C or lower, and containing, indicated by mol% on the basis of oxides, SiO₂ 66 to 70, Al₂O₃ 12 to 15, B₂O₃ 0 to 1.5, MgO exceeding 9.5 to 13, CaO 4 to 9, SrO 0.5 to 4.5, BaO 0 to 1, and ZrO₂ 0 to 2, in which MgO+CaO+SrO+BaO is from 17 to 21, MgO/(MgO+CaO+SrO+BaO) is 0.40 or more, MgO/(MgO+CaO) is 0.40 or more, and MgO/(MgO+SrO) is 0.60 or more.

## Description

### TECHNICAL FIELD

The present invention relates to an alkali-free glass substrate that is suitable as a glass substrate for various displays and a glass substrate for a photomask, reduced in thickness by etching treatment using hydrofluoric acid (HF) and substantially free from an alkali metal oxide, and to a method for reducing thickness of an alkali-free glass substrate.

### BACKGROUND ART

Heretofore, a substrate glass for various displays, particularly one on which a metal or oxide thin film or the like is formed on the surface thereof has been required to have the following characteristics:
(1) Not substantially containing alkali metal ions; because in the case where an alkali metal oxide is contained, alkali metal ions diffuse in the thin film, resulting in deterioration of film characteristics.
(2) Having a high strain point so that deformation of a glass and shrinkage (thermal shrinkage) due to structure stabilization of the glass can be minimized when exposed to high temperature in a thin film formation step.
(3) Having sufficient chemical durability to various chemicals used in semiconductor formation; in particular, having durability to buffered hydrofluoric acid (BHF: mixed liquid of hydrofluoric acid and ammonium fluoride) for etching SiOx or SiNx, a chemical solution containing hydrochloric acid used for etching of ITO, various acids (nitric acid, sulfuric acid, etc.) used for etching of an metal electrode, and an alkaline of a resist removing liquid.
(4) Having no defects (bubbles, striae, inclusions, pits, flaws, etc.) in the inside and on the surface.
   In addition to the above requirements, the recent situations are as follows.
(5) Reduction in weight of a display is required, and the glass itself is also required to be a glass having a small density.
(6) Reduction in weight of a display is required, and a decrease in thickness of the substrate glass is desired.
(7) In addition to conventional amorphous silicon (a-Si) type liquid crystal displays, polycrystal silicon (p-Si) type liquid crystal displays requiring a slightly high heat treatment temperature have come to be produced (a-Si: about 350°C → p-Si: 350 to 550°C).
(8) In order to improve productivity and increase thermal shock resistance by increasing the rate of rising and falling temperature in heat treatment for preparation of a liquid crystal display, a glass having a small average thermal expansion coefficient is required.

On the other hand, dry etching has prevailed, and requirement of BHF resistance has come to be weakened. As conventional glasses, many glasses containing B₂O₃ in an amount of from 6 to 10 mol% have been used in order to improve BHF resistance. However, B₂O₃ has a tendency to decrease the strain point. As examples of alkali-free glasses containing no or only small amount of B₂O₃, there are the following ones:

Patent Document 1 discloses a SiO₂-Al₂O₃-SrO glass containing no B₂O₃. However, the temperature required for melting is high, which causes a difficulty in production.

Patent Document 2 discloses a SiO₂-Al₂O₃-SrO crystallized glass containing no B₂O₃. However, the temperature required for melting is high, which causes a difficulty in production.

Patent Document 3 discloses a glass containing B₂O₃ in an amount of from 0 to 3% by weight. However, the strain point in Examples thereof is 690°C or lower.

Patent Document 4 discloses a glass containing B₂O₃ in an amount of from 0 to 5 mol%. However, the average thermal expansion coefficient thereof at from 50 to 350°C exceeds 50×10⁻⁷/°C.

Patent Document 5 discloses a glass containing B₂O₃ in an amount of from 0 to 5 mol%. However, the thermal expansion is large, and the density thereof is also high.

In order to solve the problems in the glasses described in Patent Documents 1 to 5, an alkali-free grass described in Patent Document 6 is proposed. The alkali-free grass described in Patent Document 6 is considered to have a high strain point, to be able to be formed by a float process, and to be suitable for use in a substrate for a display, a substrate for a photomask and the like.

### PRIOR ART DOCUMENTS

### PATENT DOCUMENTS

Patent Document 1: JP-A-S62-113735
Patent Document 2: JP-A-S62-100450
Patent Document 3: JP-A-H4-325435
Patent Document 4: JP-A-H5-232458
Patent Document 5: US Patent 5,326,730
Patent Document 6: JP-A-H10-45422
Patent Document 7: JP-T-2009-066624

### SUMMARY OF THE INVENTION

### PROBLEMS THAT THE INVENTION IS TO SOLVE

On the other hand, in fields of medium- and small-sized liquid crystal displays (LCDs) and organic EL displays (OELDs), particularly portable displays for mobiles, digital cameras, cell-phones and the like, it has become an important problem to reduce display weight and thickness. In order to realize a further reduction in thickness of a glass substrate, a step of performing etching treatment on a surface of the glass substrate to reduce substrate thickness (to reduce thickness) has been widely employed after an array-color filter sticking step. For example, a surface of a glass substrate having a thickness of from 0.4 mm to 0.7 mm is subjected to etching treatment (hereinafter referred to as "hydrofluoric acid etching treatment") with an etching solution containing hydrofluoric acid (HF) to obtain a glass substrate having a thickness of from 0.1 mm to 0.4 mm (see Patent Document 7).

In the case of reducing thickness of the glass substrate by the hydrofluoric acid etching treatment, it is required (1) that the etching rate at the time of the hydrofluoric acid etching treatment is high and (2) that the glass substrate after the etching treatment has a sufficient strength.

However, although there is a solid phase crystallization method as a method for producing high quality p-Si TFT, it is required to further increase the strain point in order to perform this method.

Further, from a request in a glass production process, particularly in melting and forming, it has been required to decrease viscous properties of the glass, particularly the temperature T₄ at which glass viscosity reaches 10⁴ dPa.s.

An object of the present invention is to provide an alkali-free glass substrate that solves the above-mentioned disadvantages, has a high strain point, a low viscosity, particularly a low temperature T₄ at which glass viscosity reaches 10⁴ dPa·s, a high etching rate at the time of the hydrofluoric acid etching treatment, and a high strength after the hydrofluoric acid etching treatment, hardly bend even when it is thin, and is less likely to cause a problem such as color unevenness even when stress is applied; and a method for reducing thickness of an alkali-free glass substrate.

### MEANS FOR SOLVING THE PROBLEMS

The present invention provides an alkali-free glass substrate (1) with a thickness of 0.4 mm or less, which has been reduced in thickness by 5 µm or more by a hydrofluoric acid (HF) etching treatment, in which the alkali-free glass substrate contains an alkali-free glass described below, and the alkali-free glass substrate after reduced in thickness has a specific modulus of 32 MNm/kg or more and a photoelastic constant of 31 nm/MPa/cm or less,
the alkali-free glass having a strain point of 710°C or higher, a temperature T₂ at which a glass viscosity reaches 10² dPa·s of 1710°C or lower, a temperature T₄ at which the glass viscosity reaches 10⁴ dPa·s of 1320°C or lower, and containing, indicated by mol% on the basis of oxides,

| | |
|---|---|
| SiO₂ | 66 to 70, |
| Al₂O₃ | 12 to 15, |
| B₂O₃ | 0 to 1.5, |
| MgO | exceeding 9.5 to 13, |
| CaO | 4 to 9, |
| SrO | 0.5 to 4.5, |
| BaO | 0 to 1 and |
| ZrO₂ | 0 to 2, |

in which MgO+CaO+SrO+BaO is from 17 to 21,
MgO/(MgO+CaO+SrO+BaO) is 0.40 or more,
MgO/(MgO+CaO) is 0.40 or more, and
MgO/(MgO+SrO) is 0.60 or more.

The present invention also provides an alkali-free glass substrate (2) with a thickness of 0.4 mm or less, which has been reduced in thickness by 5 µm or more by a hydrofluoric acid (HF) etching treatment, in which the alkali-free glass substrate contains an alkali-free glass described below, and the alkali-free glass substrate after reduced in thickness has a specific modulus of 32 MNm/kg or more and a photoelastic constant of 31 nm/MPa/cm or less,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and containing, indicated by mol% on the basis of oxides,

| | |
|---|---|
| SiO₂ | 66 to 70, |
| Al₂O₃ | 12 to 15, |
| B₂O₃ | 0 to 1.5, |
| MgO | 5 to 9.5, |
| CaO | 4 to 11, |
| SrO | 0.5 to 4.5, |
| BaO | 0 to 1 and |
| ZrO₂ | 0 to 2, |

in which MgO+CaO+SrO+BaO is from exceeding 18.2 to 21,
MgO/(MgO+CaO+SrO+BaO) is 0.25 or more,
MgO/(MgO+CaO) is 0.3 or more,
MgO/(MgO+SrO) is 0.60 or more, and
Al₂O₃×(MgO/(MgO+CaO+SrO+BaO)) is 5.5 or more.

The alkali-free glass substrates (1) and (2) preferably have an average thermal expansion coefficient at 50 to 350°C of from 30×10⁻⁷ to 43×10⁻⁷/°C.

The alkali-free glass substrate (1) and (2) preferably have an average fracture load of 300 N or more in terms of a thickness of 0.4 mm, which is measured by a ball-on-ring (BOR) method using a ring having a diameter of 30 mm and an R of 2.5 mm and a ball having a diameter of 10 mm.

Further, the present invention provides a method (1) for reducing thickness of an alkali-free glass substrate,
in which the alkali-free glass substrate contains an alkali-free glass described below, and the alkali-free glass substrate is reduced in thickness by 5 µm or more under a condition that an elution amount per unit area and per unit time when at least one principal surface of the alkali-free glass substrate is immersed in an etching solution containing hydrofluoric acid (HF) (25°C, 5% HF aqueous solution) becomes 0.17 (mg/cm²)/min or more,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and containing, indicated by mol% on the basis of oxides,

| | |
|---|---|
| SiO₂ | 66 to 70, |
| Al₂O₃ | 12 to 15, |
| B₂O₃ | 0 to 1.5, |
| MgO | exceeding 9.5 to 13, |
| CaO | 4 to 9, |
| SrO | 0.5 to 4.5, |
| BaO | 0 to 1 and |
| ZrO₂ | 0 to 2, |

in which MgO+CaO+SrO+BaO is from 17 to 21,
MgO/(MgO+CaO+SrO+BaO) is 0.40 or more,
MgO/(MgO+CaO) is 0.40 or more, and
MgO/(MgO+SrO) is 0.60 or more.

The present invention also provides a method (2) for reducing thickness of an alkali-free glass substrate,
in which the alkali-free glass substrate contains an alkali-free glass described below, and the alkali-free glass substrate is reduced in thickness by 5 µm or more under a condition that an elution amount per unit area and per unit time when at least one principal surface of the alkali-free glass substrate is immersed in an etching solution containing hydrofluoric acid (HF) (25°C, 5% HF aqueous solution) becomes 0.17 (mg/cm²)/min or more,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and containing, indicated by mol% on the basis of oxides,

| | |
|---|---|
| SiO₂ | 66 to 70, |
| Al₂O₃ | 12 to 15, |
| B₂O₃ | 0 to 1.5, |
| MgO | 5 to 9.5, |
| CaO | 4 to 11, |
| SrO | 0.5 to 4.5, |
| BaO | 0 to 1 and |
| ZrO₂ | 0 to 2, |

in which MgO+CaO+SrO+BaO is from exceeding 18.2 to 21,
MgO/(MgO+CaO+SrO+BaO) is 0.25 or more,
MgO/(MgO+CaO) is 0.3 or more,
MgO/(MgO+SrO) is 0.60 or more, and
Al₂O₃×(MgO/(MgO+CaO+SrO+BaO)) is 5.5 or more.

### ADVANTAGEOUS EFFECTS OF INVENTION

The alkali-free glass substrate of the present invention has a high strain point, a low temperature T₄ at which glass viscosity reaches 10⁴ dPa·s, a high etching rate at the time of a hydrofluoric acid etching treatment and a high strength after the hydrofluoric acid etching treatment, hardly bend even when it is thin, and is less likely to cause a problem such as color unevenness even when stress is applied. The substrate is therefore suitable as a thin glass substrate having a thickness of 0.4 mm or less, which is used in fields of medium- and small-sized LCDs and OLEDs, particularly portable displays such as mobiles, digital cameras and cell-phones. The alkali-free glass substrate of the present invention can also be used as magnetic disc glass substrates.

Methods for reducing thickness of an alkali-free glass substrate of the present invention are described below.

In a method (1) for reducing thickness of an alkali-free glass substrate, according to the present invention, there is used an alkali-free glass substrate using raw materials mixed so as to obtain the following glass composition 1:
indicated by mol% on the basis of oxides,

| | |
|---|---|
| SiO₂ | 66 to 70, |
| Al₂O₃ | 12 to 15, |
| B₂O₃ | 0 to 1.5, |
| MgO | exceeding 9.5 to 13, |
| CaO | 4 to 9, |
| SrO | 0.5 to 4.5, |
| BaO | 0 to 1 and |
| ZrO₂ | 0 to 2, |

in which MgO+CaO+SrO+BaO is from 17 to 21,
MgO/(MgO+CaO+SrO+BaO) is 0.40 or more,
MgO/(MgO+CaO) is 0.40 or more, and
MgO/(MgO+SrO) is 0.60 or more.

Further, in a method (2) for reducing thickness of an alkali-free glass substrate, according to the present invention, there is used an alkali-free glass substrate using raw materials mixed so as to obtain the following glass composition 2:
indicated by mol% on the basis of oxides,

| | |
|---|---|
| SiO₂ | 66 to 70, |
| Al₂O₃ | 12 to 15, |
| B₂O₃ | 0 to 1.5, |
| MgO | 5 to 9.5, |
| CaO | 4 to 11, |
| SrO | 0.5 to 4.5, |
| BaO | 0 to 1 and |
| ZrO₂ | 0 to 2, |

in which MgO+CaO+SrO+BaO is from exceeding 18.2 to 21,
MgO/(MgO+CaO+SrO+BaO) is 0.25 or more,
MgO/(MgO+CaO) is 0.3 or more,
MgO/(MgO+SrO) is 0.60 or more, and
Al₂O₃×(MgO/(MgO+CaO+SrO+BaO)) is 5.5 or more.

The composition range of each component is described below. When SiO₂ is less than 66% (mol%, hereinafter the same unless otherwise noted), the strain point is not sufficiently increased, the thermal expansion coefficient is increased, and the density is increased. It is preferably 66.5% or more, and more preferably 67% or more. In the case of exceeding 70%, the etching rate is decreased, the meltability of the glass is decreased and the devitrification temperature is increased. It is preferably 69% or less.

Al₂O₃ increases the Young's modulus to suppress bending after the reduction in thickness, suppresses phase separation properties of the glass, decreases the thermal expansion coefficient and increases the strain point, thereby improving the fracture toughness value to increase the glass strength. However, in the case of less than 12%, these effects do not appear and the other component for increasing expansion increases. As a result, thermal expansion becomes large. It is preferably 12.2% or more. In the case of exceeding 15%, there is a concern that the meltability of the glass is deteriorated, or that the devitrification temperature is increased. It is preferably 14.5% or less, more preferably 14% or less, and still more preferably 13.8% or less.

B₂O₃ improves melting reactivity of the glass and decreases the devitrification temperature, and therefore can be added up to 1.5%. However, too much causes an increase in the photoelastic constant, resulting in a tendency to cause a problem such as color unevenness when stress is applied. Further, when B₂O₃ is too much, the surface roughness after the reduction in thickness is increased to decrease the strength after the reduction in thickness. Furthermore, the strain point is also decreased. It is therefore preferably 1.3% or less, more preferably 1% or less, and it is further preferred that B₂O₃ is not substantially contained.

MgO increases the Young's modulus without increasing the specific gravity, so that the problem of bending can be reduced by increasing the specific modulus. Further, MgO has characteristics that it does not increase expansion and does not excessively decrease the strain point, among alkali earths, and also improves the meltability. Furthermore, the fracture toughness value is improved to increase the glass strength.

Here, in the glass composition 1, the MgO content is from exceeding 9.5% to 13%. In the case of 9.5% or less, the above-mentioned effects due to addition of MgO do not sufficiently appear. However, in the case of exceeding 13%, there is a concern that the devitrification temperature is increased. It is preferably 12.5% or less, more preferably 12% or less, and still more preferably 11.5% or less.

On the other hand, in the glass composition 2, the MgO content is from 5% to 9.5%. In the case of less than 5%, the above-mentioned effects due to addition of MgO do not sufficiently appear. It is preferably 6% or more, and more preferably 7% or more. However, in the case of exceeding 9.5%, there is a concern that the devitrification temperature is increased. It is preferably 9.3% or less, and more preferably 9% or less.

CaO has characteristics that it increases the specific modulus, does not increase expansion, and does not excessively decrease the strain point, next to MgO, among alkali earths, and also improves the meltability.

Here, in the glass composition 1, the CaO content is from 4% to 9%. In the case of less than 4%, the above-mentioned effects due to addition of CaO do not sufficiently appear. However, in the case of exceeding 9%, there is a concern that the devitrification temperature is increased, or that phosphorus that is an impurity in limestone (CaCO₃) as a raw material of CaO is incorporated in a large amount. It is preferably 7% or less, more preferably 6% or less, and still more preferably 5% or less.

On the other hand, in the glass composition 2, the CaO content is from 4% to 11%. In the case of less than 4%, the above-mentioned effects due to addition of CaO do not sufficiently appear. It is preferably 5% or more. However, in the case of exceeding 11%, there is a concern that the devitrification temperature is increased, or that phosphorus that is an impurity in limestone (CaCO₃) as a raw material of CaO is incorporated in a large amount. It is preferably 10% or less, more preferably 9% or less, still more preferably 7% or less, and yet still more preferably 6% or less.

SrO improves the meltability without increasing the devitrification temperature of the glass. However, in the case of less than 0.5%, this effect does not sufficiently appear. It is preferably 1.0% or more, and more preferably 2.0% or more. However, in the case of exceeding 4.5%, there is a concern that the thermal expansion coefficient is increased. It is preferably 4.0% or less, and more preferably 3.5% or less.

BaO is not essential, but can be contained in order to improve the meltability. However, too much causes excessive increases in expansion and density of the glass, so that the content thereof is 1% or less. It is preferably less than 1%, more preferably 0.5% or less, and it is further preferred that BaO is not substantially contained.

ZrO₂ may be contained up to 2% in order to increase the Young's modulus, to decrease the glass melting temperature or to promote crystal precipitation at the time of burning. In the case of exceeding 2%, the glass becomes unstable, or the dielectric constant ε of the glass is increased. It is preferably 1.5% or less, more preferably 1.0% or less, still more preferably 0.5% or less, and it is particularly preferred that ZrO₂ is not substantially contained.

In the glass composition 1, when the total amount of MgO, CaO, SrO and BaO is less than 17%, the etching rate is decreased, the photoelastic constant is increased, and the meltability is deteriorated. It is preferably 18% or more, and more preferably 18.5% or more. When it is more than 21%, there is a concern that a drawback of failing to decrease the thermal expansion coefficient occurs. It is preferably 20% or less.

In the glass composition 2, when the total amount of MgO, CaO, SrO and BaO is 18.2% or less, the etching rate is decreased, the photoelastic constant is increased, and the meltability is deteriorated. When it is more than 21%, there is a concern that a drawback of failing to decrease the thermal expansion coefficient occurs. It is preferably 20% or less.

In the glass composition 1, when the total amount of MgO, CaO, SrO and BaO satisfies the above and the following three requirements are also satisfied, the strain point can be increased and further the viscous properties of the glass, particularly the temperature T₄ at which glass viscosity reaches 10⁴ dPa·s can be decreased, with the specific modulus increased without increasing the devitrification temperature. Further, the fracture toughness value is improved to be able to increase the glass strength.

MgO/(MgO+CaO+SrO+BaO) is 0.4 or more, and preferably 0.45 or more.

MgO/(MgO+CaO) is 0.4 or more, preferably 0.52 or more, and more preferably 0.55 or more.

MgO/(MgO+SrO) is 0.6 or more, and preferably 0.7 or more.

In the glass composition 2, when the total amount of MgO, CaO, SrO and BaO satisfies the above and the following three requirements are also satisfied, the strain point can be increased and further the viscous properties of the glass, particularly the temperature T₄ at which glass viscosity reaches 10⁴ dPa·s can be decreased, with the specific modulus increased without increasing the devitrification temperature. Further, the fracture toughness value is improved to be able to increase the glass strength.

MgO/(MgO+CaO+SrO+BaO) is 0.25 or more, preferably 0.3 or more, more preferably 0.4 or more, and still more preferably 0.45 or more.

MgO/(MgO+CaO) is 0.3 or more, preferably 0.4 or more, more preferably 0.52 or more, and still more preferably 0.55 or more.

MgO/(MgO+SrO) is 0.6 or more, and preferably 0.7 or more.

In the glass composition 2, Al₂O₃×(MgO/(MgO+CaO+SrO+BaO)) is preferably 5.5 or more, because the Young's modulus can be increased. It is preferably 5.75 or more, more preferably 6.0 or more, still more preferably 6.25 or more, and particularly preferably 6.5 or more.

Alkali metal oxides such as Na₂O and K₂O may be added for the purpose of electric booster heating or the like. When the content of the alkali metal oxides is increased, alkali metal ions diffuse in a thin film to deteriorate film characteristics. Accordingly, this causes a problem at the time of use as a substrate glass for various displays. However, when the content of alkali metal oxides in the glass composition is 2,000 mol ppm or less, such a problem is less likely to occur. More preferably, it is 1,500 mol ppm or less, 1,300 mol ppm or less, and 1,000 mol ppm or less.

Incidentally, in order not to allow deterioration to occur in characteristics of a metal or oxide thin film provided on a glass surface at the time of display production using the alkali-free glass substrate of the present invention, it is preferred that the glass raw materials are substantially free from P₂O₅. Further, in order to facilitate recycle of the glass, it is preferred that the glass raw materials are substantially free from PbO, As₂O₃ and Sb₂O₃.

In order to improve the meltability, clarity and formability of the glass, ZnO, Fe₂O₃, SO₃, F, Cl and SnO₂ can be added in a total amount of 5% or less to the glass raw materials.

The alkali-free glass substrate of the present invention can be produced, for example, by the following procedure.

Raw materials of respective components are blended so as to obtain the target components (compositions 1 and 2), and the resulting mixture is continuously placed in a melting furnace, and heated at 1,500 to 1,800°C to melt it. The molten glass is formed to a sheet-like glass ribbon having a predetermined thickness by a forming apparatus, and this glass ribbon is annealed and thereafter cut, thereby being able to obtain an alkali-free glass substrate.

In the present invention, the sheet-like glass ribbon is preferably formed by a float process.

In the method for reducing thickness of an alkali-free glass substrate according to the present invention, the alkali-free glass substrate is reduced in thickness by 5 µm or more by subjecting at least one principal surface of two principal surfaces of the alkali-free glass substrate to a hydrofluoric acid (HF) etching treatment. The thickness of a display using the alkali-free glass substrate can be reduced and the weight of the display can be also reduced, by the reduction in thickness.

When the alkali-free glass substrate that is thin in thickness, namely has a small thickness is used from the start without reducing thickness by the etching treatment, it is necessary to handle a large thin sheet in a device production step or the like that is performed at the time of display production. Problems are therefore liable to occur such as conveying troubles due to self-weight bending (e.g., the occurrence of flaws on the substrate due to contact at the time of conveying and the like, hereinafter the same) and cracks in the substrate. The thickness is reduced preferably by 10 µm or more, more preferably by 100 µm or more, and particularly preferably by 200 µm or more.

In the method for reducing thickness of an alkali-free glass substrate according to the present invention, the thickness of the alkali-free glass substrate after the reduction in thickness is 0.4 mm or less. In the case of exceeding 0.4 mm, the effects of reducing the weight and thickness of the display are not obtained. It is more preferably 0.35 mm or less, and still more preferably 0.25 mm or less.

The thickness of the alkali-free glass substrate before reduced in thickness is preferably 0.3 mm or more. In the case of less than 0.3 mm, problems are liable to occur such as conveying troubles due to self-weight bending and cracks, because it is necessary to handle a large thin sheet in the device production step or the like. It is more preferably 0.4 mm or more, and particularly preferably 0.45 mm or more. However, in the case of exceeding 0.75 mm, there is a concern that the time required for the reduction in thickness for reducing the weight and thickness of the display becomes too long. It is more preferably 0.65 mm or less, and still more preferably 0.55 mm or less.

As a chemical solution for the etching treatment, a chemical solution containing hydrofluoric acid (HF) is used. Although the etching treatment can also be performed with an alkaline chemical solution, the chemical solution containing hydrofluoric acid has a higher etching rate and can perform etching smoothly. The concentration of hydrofluoric acid contained in the chemical solution is more preferably 1% by mass or more, still more preferably 3% by mass or more, and particularly preferably 5% by mass or more. Further, in addition to hydrofluoric acid, acids other than hydrofluoric acid, such as hydrochloric acid, nitric acid and sulfuric acid, are preferably added to the chemical solution.

At the time of the etching treatment, at least one principal surface of the alkali-free glass substrate is immersed in the chemical solution containing hydrofluoric acid. The alkali-free glass substrate is reduced in thickness in a predetermined amount by immersion thereof for a predetermined period of time depending on the concentration of hydrofluoric acid in the chemical solution.

In the etching treatment, the chemical solution is preferably allowed to flow by at least one method of stirring, bubbling, ultrasonic waves and showering. In place of allowing the chemical solution to flow, the alkali-free glass substrate may be moved by at least one method of oscillation and rotation.

In the method for reducing thickness of an alkali-free glass substrate according to the present invention, the etching treatment is performed under such conditions that when immersed in 5% by mass hydrofluoric acid (HF) of 25°C, the elution amount per unit area and unit time, which gives an indication of the etching rate, becomes 0.17 (mg/cm²)/min or more. In the case of less than 0.17 (mg/cm²)/min, there is a concern that the time required for the reduction in thickness becomes too long. It is more preferably 0.18 (mg/cm²)/min or more.

The alkali-free glass substrate reduced in thickness by the method according to the present invention has a high strength after the reduction in thickness. Specifically, the average fracture load is preferably 300 N or more in terms of a thickness of 0.4 mm, which is obtained by measuring the principal surface on the side having been subjected to the etching treatment (surface on the side to be evaluated) of the alkali-free glass substrate after the reduction in thickness by a ball-on-ring (BOR) method using a ring having a diameter of 30 mm and an R of 2.5 mm (the cross-section of the ring is a circle, and R is a radius of the circle) and a ball having a diameter of 10 mm (placed on the ring, with the surface on the side to be evaluated facing downward). The diameter of the ring as used herein means a diameter of the circle, which passes through a center of the cross section. In the case of the ring having a diameter of 30 mm and R=2.5 mm, the outermost diameter of the ring is 35 mm, and the innermost diameter thereof is 25 mm.

Further, the average fracture load means an average value of measurement results obtained by performing plural measurements of the average fracture load by the BOR method. Incidentally, in Examples described later, the measurements of the fracture load by the BOR method were performed 5 times, and the average value of the measurement results was taken as the average fracture load.

When the average fracture load measured by the BOR method is less than 300 N in terms of a thickness of 0.4 mm, the surface strength of the alkali-free glass substrate is low, and there is a concern that the strength after the reduction in thickness becomes a problem, such that the glass substrate is cracked in handling and the like at the time of display production (e.g., the glass substrate is cracked in such a step that the alkali-free glass substrate after device production is lifted up with a support pin or the like). It is more preferably 350 N or more.

The thickness conversion in the BOR method is performed by the following procedure.

In the BOR method, the stress generated on the surface of the glass substrate is inversely proportional to the square of the thickness, so that the fracture load W (N) in terms of a thickness of 0.4 mm can be determined from a relational equation W=w×0.16/t², when the thickness of the glass substrate is taken as t (mm) and the fracture load obtained by the BOR method is taken as w (N).

The alkali-free glass substrate reduced in thickness by the method according to the present invention preferably has a surface strength of 500 MPa or more by three-point bending of the principal surface on the side having been subjected to the etching treatment (surface on the side to be evaluated) of the alkali-free glass substrate after the reduction in thickness. In the case of less than 500 MPa, when the display using the alkali-free glass substrate reduced in thickness is used as a portable display, there is a concern that a problem such as cracks is liable to occur. It is more preferably 800 MPa or more, still more preferably 1,000 MPa or more, particularly preferably 1,200 MPa or more, and most preferably 1,500 MPa or more.

The surface strength by three-point bending of the principal surface on the side having been subjected to the etching treatment (surface on the side to be evaluated) of the alkali-free glass substrate after the reduction in thickness is measured as follows. The glass substrate is scribed with a point scriber under conditions where the surface to be evaluated is protected with a seal, and cut. Thereafter, the seal on the surface to be evaluated is peeled off, and the glass substrate is placed on a three-point bending jig having a span of 10 mm and an R of 1.5 mm in such a manner that the unscribed side faces downward. From the fracture load at the time when pressed from the scribed side of the upper surface with the jig having an R of 1.5 mm, the surface strength by three-point bending is calculated.

When the surface to be evaluated is flawed, the strength is decreased, so that it is necessary that the surface to be evaluated is kept untouched after the reduction in thickness. In the bending test, the presence of a fracture starting point at an edge leads to measurement of the edge strength, not the surface strength, so that only the test results in the case where the starting point is present in the surface are employed to determine the average fracture load.

Incidentally, in this description, for the circumstance at the time when the average fracture load is measured by the BOR method or three-point bending, the temperature is 22±2°C, and the humidity is 40±10%.

In the alkali-free glass substrate reduced in thickness by the method according to the present invention, the surface roughness of the principal surface on the side having been subjected to the etching treatment of the alkali-free glass substrate after the reduction in thickness is preferably 0.75 nm or less in Ra of a 1 µm square in AFM measurement. In the case of exceeding 0.75 nm, there is a concern that the strength of the alkali-free glass substrate is decreased. It is more preferably 0.7 nm or less.

In the present invention, the alkali-free glass substrates of the above-mentioned glass compositions 1 and 2 have a strain point of 710°C or higher, so that thermal shrinkage at the time of display production using the alkali-free glass substrates can be suppressed. Further, a solid phase crystallization method can be applied as a production method of p-Si TFT, which is performed in a step of producing a display such as LCD. It is more preferably 715°C or higher, still more preferably 720°C or higher, and particularly preferably 735°C or higher. When the strain point is 735°C or higher, it is suitable for high strain point use (e.g., a display substrate or lighting substrate for OLED, or a thin display substrate or lighting substrate having a thickness of 100 µm or less).

However, when the strain point of the glass is too high, it is necessary to increase the temperature of the forming apparatus, which decreases the lifetime of the forming apparatus. For this reason, the sheet glass of the present invention has a strain point of 750°C or lower.

Further, the alkali-free glass substrates of the above-mentioned glass compositions 1 and 2 have a glass transition point of preferably 760°C or higher, more preferably 770°C or higher, and still more preferably 780°C or higher, for the same reason as the strain point.

Furthermore, the alkali-free glass substrates of the above-mentioned glass compositions 1 and 2 have an average thermal expansion coefficient at from 50 to 300°C, preferably at from 50 to 350°C, of preferably from 30×10⁻⁷ to 43×10⁻⁷/°C, thereby the thermal shock resistance is large and the productivity at the time of display production using the alkali-free glass substrates can be increased. In the glass of the present invention, the average thermal expansion coefficient at from 50 to 300°C, preferably at from 50 to 350°C, is more preferably from 35×10⁻⁷/°C to 40×10⁻⁷/°C.

In addition, the alkali-free glass substrates of the above-mentioned glass compositions 1 and 2 have a specific gravity of preferably 2.65 or less, more preferably 2.64 or less, and still more preferably 2.62 or less.

Moreover, the alkali-free glass substrates of the above-mentioned glass compositions 1 and 2 have a specific modulus of 32 MNm/kg or more. In the case of less than 32 MNm/kg, problems such as conveying troubles due to self-weight bending and cracks are liable to occur. It is more preferably 33 MNm/kg or more.

Further, the alkali-free glass substrates of the above-mentioned glass compositions 1 and 2 have a Young's modulus of preferably 84 GPa or more, more preferably 86 GPa or more, still more preferably 88 GPa or more, and yet still more preferably 90 GPa or more.

Furthermore, the alkali-free glass substrates of the above-mentioned glass compositions 1 and 2 have a photoelastic constant of 31 nm/MPa/cm or less.

When the glass substrate used in a display has birefringence due to stress generated in an LCD production step or at the time of use of an LCD apparatus, there is sometimes observed a phenomenon that display of black turns to gray to decrease a contrast of the liquid crystal display. This phenomenon can be suppressed by adjusting the photoelastic constant to 31 nm/MPa/cm or less. It is preferably 30 nm/MPa/cm or less, more preferably 29 nm/MPa/cm or less, still more preferably 28.5 nm/MPa/cm or less, and particularly preferably 28 nm/MPa/cm or less.

Considering easiness of securing other physical properties, the photoelastic constant is preferably 23 nm/MPa/cm or more, and more preferably 25 nm/MPa/cm or more.

Incidentally, the photoelastic constant can be measured by a disk compression method at a measuring wavelength of 546 nm.

In addition, it is preferred that the alkali-free glass substrates of the above-mentioned glass compositions 1 and 2 have a dielectric constant of 5.6 or more.

In the case of an In-Cell type touch panel (a touch sensor is incorporated in a liquid crystal display panel) as described in JP-A-2011-70092, it is better that the glass substrate has a higher dielectric constant from the standpoints of improvement in sensing sensitivity of the touch sensor, a decrease in drive voltage and electric power saving. When the dielectric constant is 5.6 or more, the sensing sensitivity of the touch sensor is improved. It is preferably 5.8 or more, more preferably 6.0 or more, further preferably 6.2 or more, and particularly preferably 6.4 or more.

Incidentally, the dielectric constant can be measured according to the method described in JIS C-2141.

Further, the alkali-free glass substrates of the above-mentioned glass compositions 1 and 2 have a temperature T₂ at which the viscosity η becomes 10² poise (dPa·s) of 1,710°C or lower, preferably lower than 1,710°C, more preferably 1,700°C or lower, and still more preferably 1,690°C or lower. Melting thereof is therefore relatively easy.

Further, the alkali-free glass substrates of the above-mentioned glass compositions 1 and 2 have a temperature T₄ at which the viscosity η becomes 10⁴ poise of 1,320°C or lower, preferably 1,315°C or lower, more preferably 1,310°C or lower, and still more preferably 1,305°C or lower. This is therefore suitable for float forming.

Furthermore, the alkali-free glass substrates of the above-mentioned glass compositions 1 and 2 have a devitrification temperature of preferably 1,350°C or lower, because forming by a float process becomes easy. It is preferably 1,340°C or lower, and more preferably 1,330°C or lower.

The devitrification temperature in the present description is the average value of the maximum temperature at which crystals precipitate on the surface and in the inside of the glass and the minimum temperature at which crystals do not precipitate, which are determined by placing crushed glass particles on a platinum dish, performing heat treatment for 17 hours in an electric furnace controlled to a constant temperature, and performing observation under an optical microscope after the heat treatment.

### EXAMPLES

### (Examples 1 and 2 and Comparative Example 1)

Raw materials of respective components were blended so as to obtain the target compositions shown in Table 1, and melted in a continuous melting furnace, followed by sheet formation by a float process to obtain alkali-free glass substrates.

After each of the resulting glass substrates was mirror polished, one surface of the glass substrate was subjected to an etching treatment with a mixed acid of 8% by mass hydrofluoric acid and 10% by mass hydrochloric acid in such a manner that the thickness was reduced from 0.7 mm to 0.4 mm, while conducting bubbling, thereby performing reduction in thickness.

Using the glass substrate after reduced in thickness, measurements of the fracture load were performed 5 times by a ball-on-ring (BOR) method using a SUS ring having a diameter of 30 mm and an R=2.5 mm and a SUS ball having a diameter of 10 mm, and the average fracture load in terms of a thickness of 0.4 mm obtained from these measurement results are shown in Table 2.

Further, the surface roughness on the etching-treated surface at the time of performing etching treatment by 30 µm in thickness by the same procedure as described above was determined by the following technique. The results thereof are shown in the following Table 2.

### [Measuring Method of Surface Roughness by AFM]

For the etching-treated surface of the glass substrate, the surface roughness Ra of a 1 µm square is determined at a scan rate of 1 Hz with XE-HDM manufactured by Park Systems Inc.

Further, as an indication of the etching rate at the time of the hydrofluoric acid etching treatment, the elution amount per unit area and unit time at the time when the alkali-free glass substrates were immersed in 5% by mass hydrofluoric acid of 25°C was evaluated by the following procedure. The results thereof are shown in Table 2.

### [Measuring Method of Elution Amount per Unit Area and Unit Time]

After the alkali-free glass substrate that has been mirror polished and cut to a 40 mm square is cleaned, the mass thereof is measured. The substrate is immersed in 5% by mass hydrofluoric acid of 25°C for 20 minutes, and the mass after the immersion is measured. The surface area is calculated from a sample size, and the mass reduction is divided by the surface area, thereafter further followed by being divided by the immersion time, thereby determining the elution amount per unit area and unit time.

Incidentally, for the alkali-free glass substrates obtained by the above-mentioned procedure, the strain point, the Young's modulus, the specific modulus and the photoelastic constant were also measured. The results thereof are shown in Table 2.

**[Table 1]**

| mol% | Ex. 1 | Ex. 2 | Comp. Ex. 1 |
|---|---|---|---|
| SiO₂ | 66.9 | 66.9 | 65.8 |
| Al₂O₃ | 13.0 | 13.2 | 10.8 |
| B₂O₃ | 1.3 | 0.9 | 7.7 |
| MgO | 9.0 | 9.3 | 5.7 |
| CaO | 5.3 | 5.3 | 4.8 |
| SrO | 4.5 | 4.4 | 5.0 |
| BaO | 0 | 0 | 0 |
| ZrO₂ | 0 | 0 | 0 |
| MgO+CaO+SrO+BaO | 18.8 | 19.0 | 15.5 |
| MgO/(MgO+CaO+SrO+BaO) | 0.48 | 0.49 | 0.37 |
| MgO/(MgO+CaO) | 0.63 | 0.64 | 0.55 |
| MgO/(MgO+SrO) | 0.67 | 0.68 | 0.54 |
| Al₂O3×(MgO/(MgO+CaO+SrO+BaO)) | 6.2 | 6.5 | 4.0 |

**[Table 21**

| | Ex. 1 | Ex. 2 | Comp. Ex. 1 |
|---|---|---|---|
| Strain Point Tₛₜ[°C] | 719 | 724 | 663 |
| Glass Transition Point T_{g}[°C] | 773 | 777 | 718 |
| Average Thermal Expansion Coefficient [×10⁻⁷/°C] | 39 | 39 | 38 |
| Specific Gravity | 2.59 | 2.59 | 2.51 |
| Young's Modulus [GPa] | 86 | 87 | 77 |
| Specific Modulus [MNm/kg] | 33.2 | 33.5 | 30.5 |
| T₂ [°C] | 1640 | 1640 | 1640 |
| T₄ [°C] | 1290 | 1270 | 1270 |
| Devitrification Temperature [°C] | 1280 | 1260 | 1260 |
| Photoelastic Constant [nm/MPa/cm] | 27 | 31 | 31 |
| Dielectric Constant | 6.1 | 6.1 | 5.8 |
| Average Fracture Load (BOR Method) after Etching Treatment (in terms of 0.4 mm) [N] | 360 | 370 | 280 |
| Surface Roughness Ra (1 µm square) after Etching Treatment [nm] | 0.59 | 0.55 | 0.77 |
| Elution Amount in Etching Treatment (25°C, 5% HF Solution) [(mg/cm²)/min] | 0.19 | 0.19 | 0.16 |

### (Examples 3 to 5 and Comparative Example 2)

Raw materials of respective components were blended so as to obtain the target compositions shown in Examples 3 to 5 in Table 3, and melted at a temperature of 1650°C for 1 hour by using a platinum crucible. After melted, they were allowed to flow out into a carbon sheet shape, and kept at the glass transition point +30°C for 1 hour. Thereafter, cooling was performed at 1°C/min, followed by performing annealing to obtain alkali-free glass substrates.

After each of the resulting glass substrates was mirror polished, one surface of the glass substrate was subjected to an etching treatment with a mixed acid of 8% by mass hydrofluoric acid and 10% by mass hydrochloric acid in such a manner that the thickness was reduced from 0.7 mm to 0.4 mm, while conducting bubbling, thereby performing reduction in thickness.

Using the glass substrate after reduced in thickness, measurements of the fracture load were performed 5 times by a ball-on-ring (BOR) method using a SUS ring having a diameter of 30 mm and an R=2.5 mm and a SUS ball having a diameter of 10 mm, and the average fracture load in terms of a thickness of 0.4 mm obtained from these measurement results are shown in Table 4.

Further, the surface roughness on the etching-treated surface at the time of performing etching treatment by 30 µm in thickness by the same procedure as described above was determined by the above-mentioned technique. The results thereof are shown in Table 4.

Furthermore, the elution amount per unit area and unit time at the time when the alkali-free glass substrates were immersed in 5% by mass hydrofluoric acid of 25°C was determined by the above-mentioned technique. The results thereof are shown in Table 4.

Incidentally, for the alkali-free glass substrates obtained by the above-mentioned procedure, the strain point, the Young's modulus, the specific modulus and the photoelastic constant were also measured. The results thereof are shown in Table 4. Incidentally, values in parentheses in Tables 3 and 4 are calculated values.

**[Table 3]**

| mol% | Ex. 3 | Ex. 4 | Ex. 5 | Comp. Ex. 2 |
|---|---|---|---|---|
| SiO₂ | 67.1 | 67.1 | 67.2 | 70 |
| Al₂O₃ | 13.5 | 13.6 | 13.8 | 13 |
| B₂O₃ | 0.0 | 0.7 | 0.4 | 1 |
| MgO | 9.8 | 10.1 | 7.5 | 5 |
| CaO | 5.3 | 4.1 | 8.6 | 5 |
| SrO | 4.3 | 4.4 | 2.5 | 2 |
| BaO | 0 | 0 | 0 | 4 |
| ZrO₂ | 0 | 0 | 0 | 0 |
| MgO+CaO+SrO+BaO | 19.4 | 18.6 | 18.5 | 16 |
| MgO/(MgO+CaO+SrO+BaO) | 0.51 | 0.54 | 0.40 | 0.31 |
| MgO/(MgO+CaO) | 0.65 | 0.71 | 0.47 | 0.5 |
| MgO/(MgO+SrO) | 0.70 | 0.70 | 0.75 | 0.71 |
| Al₂O₃×(MgO/(MgO+CaO+SrO+BaO)) | 6.8 | 7.4 | 5.6 | 4.1 |

**[Table 4]**

| mol% | Ex. 3 | Ex. 4 | Ex. 5 | Comp. Ex. 2 |
|---|---|---|---|---|
| Strain Point [°C] | 727 | (730) | (750) | 736 |
| Glass Transition Point T_{g}[°C] | 778 | (784) | (789) | - |
| Average Thermal Expansion Coefficient [×10⁻⁷/°C] | 39.0 | (38.3) | (39.2) | 39.0 |
| Specific Gravity | 2.59 | (2.59) | (2.56) | 2.63 |
| Young's Modulus [GPa] | 88 | (87.0) | (88.3) | 82 |
| Specific Modulus [MNm/kg] | 34 | 34 | 34 | 31 |
| T₂ [°C] | 1650 | (1653) | (1648) | 1720 |
| T₄ [°C] | 1300 | (1305) | (1302) | 1350 |
| Devitrification Temperature [°C] | 1300 | - | - | 1220 |
| Photoelastic Constant [nm/MPa/cm] | 27.0 | (26.9) | (26.5) | 28.3 |
| Dielectric Constant | 6.1 | - | - | - |
| Average Fracture Load (BOR Method) after Etching Treatment (in terms of 0.4 mm) [N] | 370 | 406 | 430 | 340 |
| Surface Roughness Ra (1 µm square) after Etching Treatment [nm] | 0.59 | 0.61 | 0.63 | 0.6 |
| Elution Amount in Etching Treatment (25°C, 5% HF Solution) [(mg/cm)²/min] | 0.19 | 0.19 | 0.2 | 0.15 |

The present invention has been described in detail with reference to specific embodiments thereof, but it will be apparent to one skilled in the art that various modifications and changes can be made without departing from the spirit and scope of the invention.

This application is based on Japanese Patent Application No. 2012-124760 filed on May 31, 2012, the contents of which are incorporated herein by reference.

## Claims

1. An alkali-free glass substrate with a thickness of 0.4 mm or less, which has been reduced in thickness by 5 µm or more by a hydrofluoric acid (HF) etching treatment, wherein the alkali-free glass substrate comprises an alkali-free glass described below, and the alkali-free glass substrate after reduced in thickness has a specific modulus of 32 MNm/kg or more and a photoelastic constant of 31 nm/MPa/cm or less,
the alkali-free glass having a strain point of 710°C or higher, a temperature T₂ at which a glass viscosity reaches 10² dPa·s of 1710°C or lower, a temperature T₄ at which the glass viscosity reaches 10⁴ dPa·s of 1320°C or lower, and comprising, indicated by mol% on the basis of oxides,
| | |
|---|---|
| SiO₂ | 66 to 70, |
| Al₂O₃ | 12 to 15, |
| B₂O₃ | 0 to 1.5, |
| MgO | exceeding 9.5 to 13, |
| CaO | 4 to 9, |
| SrO | 0.5 to 4.5, |
| BaO | 0 to 1 and |
| ZrO₂ | 0 to 2, |
wherein MgO+CaO+SrO+BaO is from 17 to 21,
MgO/(MgO+CaO+SrO+BaO) is 0.40 or more,
MgO/(MgO+CaO) is 0.40 or more, and
MgO/(MgO+SrO) is 0.60 or more.

2. An alkali-free glass substrate with a thickness of 0.4 mm or less, which has been reduced in thickness by 5 µm or more by a hydrofluoric acid (HF) etching treatment, wherein the alkali-free glass substrate comprises an alkali-free glass described below, and the alkali-free glass substrate after reduced in thickness has a specific modulus of 32 MNm/kg or more and a photoelastic constant of 31 nm/MPa/cm or less,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and comprising, indicated by mol% on the basis of oxides,
| | |
|---|---|
| SiO₂ | 66 to 70, |
| Al₂O₃ | 12 to 15, |
| B₂O₃ | 0 to 1.5, |
| MgO | 5 to 9.5, |
| CaO | 4 to 11, |
| SrO | 0.5 to 4.5, |
| BaO | 0 to 1 and |
| ZrO₂ | 0 to 2, |
wherein MgO+CaO+SrO+BaO is from exceeding 18.2 to 21,
MgO/(MgO+CaO+SrO+BaO) is 0.25 or more,
MgO/(MgO+CaO) is 0.3 or more,
MgO/(MgO+SrO) is 0.60 or more, and
Al₂O₃×(MgO/(MgO+CaO+SrO+BaO)) is 5.5 or more.

3. The alkali-free glass substrate according to claim 1 or 2, having an average thermal expansion coefficient at 50 to 350°C of from 30×10⁻⁷ to 43×10⁻⁷/°C.

4. The alkali-free glass substrate according to any one of claims 1 to 3, wherein the alkali-free glass substrate has an average fracture load of 300 N or more in terms of a thickness of 0.4 mm, which is measured by a ball-on-ring (BOR) method using a ring having a diameter of 30 mm and an R of 2.5 mm and a ball having a diameter of 10 mm.

5. A method for reducing thickness of an alkali-free glass substrate,
wherein the alkali-free glass substrate comprises an alkali-free glass described below, and the alkali-free glass substrate is reduced in thickness by 5 µm or more under a condition that an elution amount per unit area and per unit time when at least one principal surface of the alkali-free glass substrate is immersed in an etching solution containing hydrofluoric acid (HF) (25°C, 5% HF aqueous solution) becomes 0.17 (mg/cm²)/min or more,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and comprising, indicated by mol% on the basis of oxides,
| | |
|---|---|
| SiO₂ | 66 to 70, |
| Al₂O₃ | 12 to 15, |
| B₂O₃ | 0 to 1.5, |
| MgO | exceeding 9.5 to 13, |
| CaO | 4 to 9, |
| SrO | 0.5 to 4.5, |
| BaO | 0 to 1 and |
| ZrO₂ | 0 to 2, |
wherein MgO+CaO+SrO+BaO is from 17 to 21,
MgO/(MgO+CaO+SrO+BaO) is 0.40 or more,
MgO/(MgO+CaO) is 0.40 or more, and
MgO/(MgO+SrO) is 0.60 or more.

6. A method for reducing thickness of an alkali-free glass substrate,
wherein the alkali-free glass substrate comprises an alkali-free glass described below, and the alkali-free glass substrate is reduced in thickness by 5 µm or more under a condition that an elution amount per unit area and per unit time when at least one principal surface of the alkali-free glass substrate is immersed in an etching solution containing hydrofluoric acid (HF) (25°C, 5% HF aqueous solution) becomes 0.17 (mg/cm²)/min or more,
the alkali-free glass having a strain point of 710°C or higher, a temperature T₂ at which glass viscosity reaches 10² dPa·s of 1710°C or lower, a temperature T₄ at which the glass viscosity reaches 10⁴ dPa·s of 1320°C or lower, and comprising, indicated by mol% on the basis of oxides,
| | |
|---|---|
| SiO₂ | 66 to 70, |
| Al₂O₃ | 12 to 15, |
| B₂O₃ | 0 to 1.5, |
| MgO | 5 to 9.5, |
| CaO | 4 to 11, |
| SrO | 0.5 to 4.5, |
| BaO | 0 to 1 and |
| ZrO₂ | 0 to 2, |
wherein MgO+CaO+SrO+BaO is from exceeding 18.2 to 21,
MgO/(MgO+CaO+SrO+BaO) is 0.25 or more,
MgO/(MgO+CaO) is 0.3 or more,
MgO/(MgO+SrO) is 0.60 or more, and
Al₂O₃×(MgO/(MgO+CaO+SrO+BaO)) is 5.5 or more.
